# EUROPÄISCHE PATENTSCHRIFT

(11) **EP 1 336 532 B1**
(45) Veröffentlichungstag und Bekanntmachung des Hinweises auf die Patenterteilung: **28.03.2007**
(21) Anmeldenummer: 03002941.7
(22) Anmeldetag: 11.02.2003
(51) Int. Cl.: B60N 2/48

(54) **Kopfstütze für Fahrzeugsitze**
Head rest for automotive seats
Appui-tête pour sièges d'automobile

(30) Priorität: 15.02.2002 DE 10206651; 06.02.2003 DE 10304949
(43) Veröffentlichungstag der Anmeldung: 20.08.2003
(73) Patentinhaber: GRAMMER Automotive GmbH, 92224 Amberg (DE)
(72) Erfinder: Pausch, Friedhelm, 42697 Solingen (DE)
(74) Vertreter: Ostriga, Sonnet, Wirths & Roche

(56) Entgegenhaltungen:
- EP-A- 0 819 568
- DE-A- 3 145 561
- DE-A- 19 600 789
- US-A- 3 512 832
- US-A- 4 589 698
- US-A- 5 590 929

## Beschreibung

Die Erfindung betrifft eine Kopfstütze für Fahrzeugsitze entsprechend dem Oberbegriff des Anspruchs 1. Eine solche Kopfstütze ist beispielsweise in der DE 196 00 789 A beschrieben.

Bei der bekannten Kopfstütze ist für die sitzlehnenseitige Befestigung einer jeden den Kopfkasten haltenden Tragstange ein Führungsteil vorgesehen, das auch als Sitzhülse bezeichnet wird. Die bekannte Sitzhülse ist mit einem Befestigungsbereich in der oberen Sitzlehnen-Quertraverse bzw. in dem oberen Sitzfehnen-Querjoch einsteckgehaltert.

Oberhalb des Befestigungsbereichs ragt ein etwa zylindrischer Abschnitt der Sitzhülse nach oben und endet dort mit einer auf der äußeren Scheitelfläche der Sitzlehne auflagernden Abdeckkappe.

Der Befestigungsbereich der Sitzhülse gemäß der DE 196 00 789 A ist in zwei zueinander höhenversetzten quertraversseitigen Einstecklöchern gehalten. Dabei übergreift ein Anlageflansch der Sitzhülse den Rand des oberen Einstecklochs oben auf der Schmalfläche der Sitzlehnentraverse. Zwischen diesem Anlageflansch und der Unterfläche der Abdeckkappe, befindet sich ein äußerer gesonderter oberer Hülsenbereich, welcher den oberen Schaftbereich der Sitzhülse eng umschließt. Zwischen dem jeweiligen Anlageflansch der Sitzhülse und der Unterfläche der Abdeckkappe verbleibt ein Frei- bzw. Zwischenraum, in welchen der obere Scheitelbereich des Sitzlehnenpolsters eingreift, wobei der Bezugstoff die Unterfläche der Abdeckkappe unmittelbar unterlagert. Als nachteilig hat sich herausgestellt, dass für den Fall, dass beispielsweise der Kopf eines Fahrgastes trotz zwischengelagertem Polsterbereich auf den Frei- bzw. Zwischenraum aufprallen sollte, ein schädliches Eindringen in den Frei- bzw. Zwischenraum, auch bei Vorhandensein des vorerwähnten äußeren gesonderten oberen Hülsenbereichs, nicht auszuschließen ist.

Um einen sauberen bündigen Abschluss zwischen der Unterfläche der Abdeckkappe und dem Bezugstoff zu erhalten, ist es vorteilhaft, dass die Unterfläche der Abdeckkappe mit einem relativ kleinen, nahezu scharfkantigen Radius an die nach oben weisende Ansichtsfläche des kopfartigen Kappenbereichs angeschlossen ist.

Eine Abdeckkappe, deren unterer Kragenbereich dem Sitzhülsen-Hauptkörper angeformt ist und deren oberer Bereich ein gesondertes Bauteil bildet, welches zugleich der Betätigung einer Rastfederklammer dient, ist durch die DE 31 45 561 C im Zusammenhang mit einer sogenannten "Schräghülse" mit einem erweiterten trichterartigen Bereich für gekröpfte Tragstangen bekannt. Der erweiterte trichterartige Bereich dient nur der Aufnahme des Kröpfungsbereichs einer Tragstange und ist deshalb mit dem Querschnitt eines langen Ovals nur sehr schmal ausgebildet (vgl. DE 31 45 561 C S. 11 Abs. 3), füllt demnach den Frei- bzw. Zwischenraum zwischen der Unterfläche der Abdeckkappe und der Oberseite der Sitzlehnentraverse nur ungenügend aus.

Bei einer Kopfstütze gemäß der US 3 512 832 A ist unmittelbar oberhalb des sich oben auf der Sitzlehnentraverse abstützende oberen Anlageflansches der axial nur sehr kurzen Sitzhülse ein etwa hülsenartiger Hohlkörper mit einem eingezogenen unteren Endbereich aufgerastet, dessen oberer Endbereich einen radial nach außen gerichteten Abdeckflansch bildet, der die Funktion einer Abdeckkappe übernimmt. Auch bei dieser bekannten Kopfstütze ist ein nachteiliger Frei- bzw. Zwischenraum vorhanden, und zwar zwischen der Oberseite der Sitzlehnentraverse und der Unterfläche des Abdeckflansches.

Bei einer anderen Kopfstütze gemäß der US 5 590 929 A lagert ein oberer sitzhülsenseitiger Stützflansch unmittelbar auf einer Sitzlehnentraverse auf, deren nach oben weisende Bereiche nur durch ein Polster abgedeckt sind, so dass ein im vorerwähnten Sinne schädlicher Frei- bzw. Zwischenraum gebildet ist.

Eine Kopfstütze gemäß der EP 0 819 568 A entspricht nicht der eingangs erwähnten engeren Gattung, denn die Sitzhülse ist nicht innerhalb einer Befestigungsstelle der Sitzlehnenstruktur gehalten. Vielmehr ist die Sitzhülse mittels einer Umspritzung an einer Quertraverse der Sitzlehnenstruktur befestigt. Gleichwohl ist auch bei jener bekannten Kopfstütze zwischen der Unterfläche der Abdeckkappe und der sitzlehnenseitigen Quertraverse ein im vorerwähnten Sinne nachteiliger Frei- bzw. Zwischenraum vorhanden.

Ausgehend von der Kopfstütze für Fahrzeugsitze gemäß der DE 196 00 789 A, besteht die der Erfindung zugrunde liegende Aufgabe darin, den sitzlehnenseitigen Halterungsbereich der bekannte Kopfstütze sicherer als bisher auszubilden.

Entsprechend der Erfindung wird diese Aufgabe gemeinsam mit den Merkmalen des Oberbegriffs des Anspruchs 1 mit dessen kennzeichnenden Merkmalen gelöst.

Eine Ausgestaltung der Erfindung besteht darin, den Füllkörper als Hohlkörper auszubilden.

Dabei kann der den Füllkörper bildende Hohlkörper mit heutzutage gängigen Flüssigkeits- oder Gasinnendruck-Spritzgießverfahren hergestellt sein.

Im übrigen hat es sich als zweckmäßig herausgestellt, Füllkörper und Führungsteil- bzw. Sitzhülsenkörper als ein stoffschlüssig zusammenhängendes einheitliches Spritzgussteil auszubilden.

Für besondere Anwendungsfälle kann es zweckmäßig sein, nur den Füllkörper an den Sitzhülsenkörper anzuformen und die Abdeckkappe als separates Bauteil auszubilden.

Eine Abdeckkappe, deren unterer Kragenbereich dem Sitzhülsen-Hauptkörper angeformt ist und deren oberer Bereich ein gesondertes Bauteil bildet, welches zugleich der Betätigung einer Rastfederklammer dient, ist durch die DE 31 45 561 C2 im Zusammenhang mit einer sogenannten "Schräghülse" mit einem erweiterten trichterartigen Bereich für gekröpfte Tragstangen an sich bekannt.

Insgesamt betrachtet, soll mit dem erfindungsgemäßen Füllkörper verhindert werden, dass bei einer übermäßigen crashbedingten Belastung und bei dementsprechend starker Verformung des Sitzlehnenpolsters ein Körperbereich, insbesondere ein Kopfbereich des Fahrgastes, in den üblicherweise kleine Bauteilradien aufweisenden Bereich der Sitzhülse zwischen Abdeckkappe und oberer Sitzlehnentraverse in verletzungsgefährdender Weise hineingelangen kann.

In den Zeichnungen sind bevorzugte Ausführungsbeispiele entsprechend der Erfindung dargestellt, es zeigt
Fig. 1 einen schematischen Teilschnitt durch eine Kopfstützen-Anordnung,
Fig. 2 ein vergrößertes Detail entsprechend der in Fig. 1 mit II bezeichneten Einkreisung.

In der nachfolgenden Zeichnungsbeschreibung sind alle Bauteile bzw. Bauteilbereiche mit analoger Funktion jedoch unterschiedlicher Ausbildung stets mit denselben Bezugszeichen versehen.

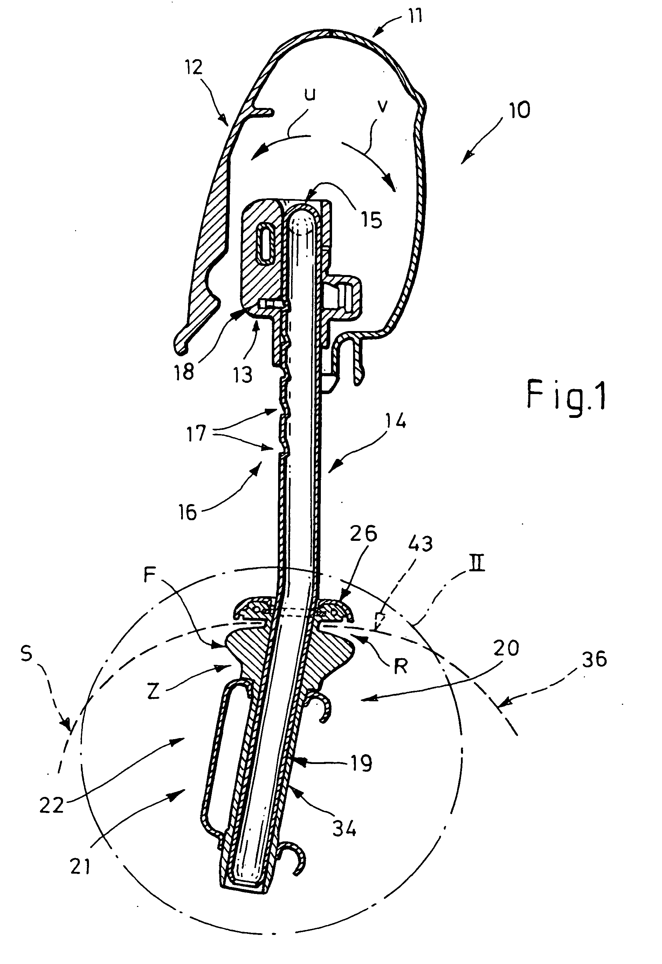

In Fig. 1 ist eine Kopfstütze für Fahrzeugsitze mit der Bezugsziffer 10 bezeichnet. Die Kopfstütze 10 weist einen Kopfkasten 11 auf, dessen äußerer Bereich 12 relativ zu seinem inneren Bereich 13 über nicht dargestellte Mittel etwa entlang den mit u und v bezeichneten Schwenkpfeilen neigeverstellbar ist.

In Fig. 1 ist weiterhin eine Tragstange 14 dargestellt, welche gemeinsam mit einer in Fig. 1 nicht sichtbaren und im Parallelabstand angeordneten zweiten Tragstange 14 gemeinsam mit einem Jochbereich 15 eine U-bügelförmige Tragstangenanordnung 16 bildet.

Die U-bügelförmige Tragstangenanordnung 16 ist aus einem gemeinsamen Rohrabschnitt geformt. Die Tragstangen 14 weisen Rastvertiefungen (Verstellkerben) 17 auf, welche mit einer Rastfeder 18, die im inneren Bereich 13 des Kopfkastens 11 gehalten ist, bei der Höhenverstellung des Kopfkastens 11 lösbar verrastend zusammenwirken.

Jeder untere Bereich 19 einer Tragstange 14 ist in einer insgesamt mit 20 bezeichneten Sitzhülse (Führungsteil) einsteckgehaltert. Die Sitzhülse 20 wiederum ist in einem oberen Querjoch 21 einer aus Stahlblech gefertigten Sitzlehnenstruktur 22 gehalten. Dazu weist das obere Querjoch 21 oben und unten - zueinander höhenversetzte - Einstecklöcher 23, 24 auf. Die Sitzhülse 20 ist in den Einstecklöchern 23, 24 unlösbar schnappverrastet aufgenommen.

Der axiale Befestigungsbereich der Sitzhülse 20 zwischen den Einstecklöchern 23, 24 ist mit 25 bezeichnet.

In ihrem oberen Bereich weist die Sitzhülse 20 eine insgesamt mit 26 bezeichnete Abdeckkappe auf, welche aus einem Abdeckkappen-Grundkörper 27 und aus einer Zierkappe 28 besteht. Die Abdeckkappe 26 enthält zudem eine Rastfeder 29, welche mit einer lediglich gestrichelt angedeuteten Fangkerbe 30 der Tragstange 14 lösbar verrastend zusammenwirkt.

Die Sitzhülse 20 ruht mit einer Anschlagfläche 31 oben auf der Schmalfläche 32 des sitzlehnenseitigen oberen Querjochs 21 auf. Die Unterfläche des Abdeckkappen-Grundkörpers 27 trägt die Bezugsziffer 33.

Der mit einem gestrichelten Doppelpfeil kenntlich gemachte Frei- bzw. Zwischenraum Z ist im wesentlichen von einem Füllkörper F besetzt, welcher im vorliegenden Falle die Tragstange 14 etwa rotationssymmetrisch umgibt, und über die durch Axialprojektion der Abdeckkappe 26 erzeugte Querschnittsfläche hinausragt.

Der Füllkörper F bildet gemeinsam mit dem Grundkörper 34 der Sitzhülse 20 und gemeinsam mit dem Abdeckkappen-Grundkörper 27 der Abdeckkappe 26 ein stoffschlüssig zusammenhängendes einheitliches Spritzgussteil aus widerstandsfähigem Kunststoff, beispielsweise aus PP.

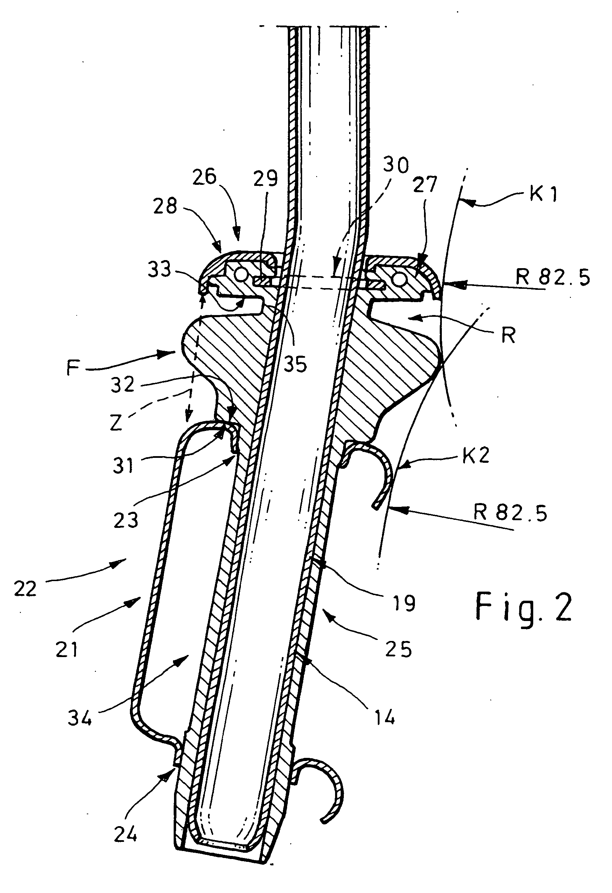

Wie aus Fig. 2 zu ersehen, ist die Querschnittskontur des Füllkörpers F nach relativ großen Außenradien gerundet. Der Füllkörper F geht mit einem etwa kreiszylindrischen Axialbereich 35 stoffschlüssig in den Abdeckkappen-Grundkörper 27 über.

Zwischen dem Abdeckkappen-Grundkörper 27 und dem Füllkörper F befindet sich ein Ringspalt R, welcher einen Teil des oberen Scheitelbereichs 36 der mit einer Strichlinie angedeuteten Sitzlehne S, also den Bezugstoff (43) und gegebenenfalls einen Polsterteilbereich, aufnimmt.

In Fig. 2 sind Umfangskonturen K1 und K2 einer zwei verschiedene Prüfstellungen einnehmenden Prüfkugel mit einem Radius von 82,5 mm dargestellt. Die jeweilige Berührungslage der Konturen K1 und K2 zeigt, dass für den Fall, dass beispielsweise der Kopf eines Fahrgastes trotz zwischengelagertem Polsterbereich auf den Zwischenraum Z aufprallen sollte, der Füllkörper F ein schädliches Eindringen in den Zwischenraum Z verhindert.

## Patentansprüche

1. Kopfstütze (10) für Fahrzeugsitze, mit mindestens einer Tragstange (14), an deren oberem Tragstangenbereich (bei 15) ein Kopfkasten (11) gehalten ist und deren unterer Tragstangenbereich (19) jeweils in einem Führungsteil (20), wie Sitzhülse od. dgl., einsteckgehaltert ist, welches in einer Befestigungsstelle (21), wie oberes Querjoch od. dgl., der Sitzlehnenstruktur (22), gehalten ist, wobei das Führungsteil (20) mit der Unterfläche (33) einer Abdeckkappe (26) auf dem oberen Scheitelbereich (36) einer Sitzlehne (S) aufsitzt und wobei zwischen der Unterfläche (33) der Abdeckkappe (26) und der Befestigungsstelle (21) der Sitzlehnenstruktur (22) ein vom Führungsteil (20) durchsetzter Zwischenraum (Z) vorhanden ist, wobei in dem unterhalb der Abdeckkappe (26) bis zur Befestigungsstelle (21) der Sitzlehnenstruktur (22) reichenden Bereich des Führungsteils (20) ein Füllkörper (F) angeordnet ist, wobei zwischen der Unterfläche (33) der Abdeckkappe (26) und dem Füllkörper (F) ein Raum (R) belassen ist, welcher der Aufnahme des Bezugstoffes (43) der Sitzlehne (S) und zusätzlich der Aufnahme von Teilen des Sitzpolsters dient, **dadurch gekennzeichnet, dass** Auslegung von Form und Volumen des Füllkörpers (F) das Eindringen der Kontur (K1, K2) einer Prüfkugel in den Frei- bzw. Zwischenraum (Z) zwischen Abdeckkappe (26) und Sitzlehnenstruktur (22) verhindert, und
dass der Füllkörper (F), die Tragstange (14) rotationssymmetrisch umgebend, über die durch Axialprojektion der Abdeckkappe (26) erzeugte Querschnittsfläche hinausragt.

2. Kopfstütze nach Anspruch 1, **dadurch gekennzeichnet, dass** der Füllkörper (F) einen Hohlkörper bildet.

3. Kopfstütze nach Anspruch 2, **dadurch gekennzeichnet, dass** der den Füllkörper (F) bildende Hohlkörper im Flüssigkeits- oder Gasinnendruck-Spritzgießverfahren hergestellt ist.

4. Kopfstütze nach einem der Ansprüche 1 bis 3, **dadurch gekennzeichnet, dass** Füllkörper (F) und Führungsteil- bzw. Sitzhülsenkörper (34) ein stoffschlüssig zusamenhängendes einheitliches Spritzgussteil bilden.

## Claims

1. Headrest (10) for vehicle seats, with at least one support bar (14) at whose upper support bar region (at 15) a head box (11) is held and whose lower support bar region (19) is in each case inserted so as to be retained in a guide part (20), such as a seat sleeve or similar, which is held in a fastening point (21), such as an upper cross-yoke or similar, of the seat back structure (22), wherein the guide part (20) with the lower face (33) of a covering cap (26) is mounted on the upper top region (36) of a seat back (S), and wherein an intermediate space (Z), which is penetrated by the guide part (20), is provided between the lower face (33) of the covering cap (26) and the fastening point (21) of the seat back structure (22), wherein a filler (F) is disposed in the region of the guide part (20) which reaches below the covering cap (26) up to the fastening point (21) of the seat back structure (22), wherein a space (R) is left between the lower face (33) of the covering cap (26) and the filler (F), which space serves to accommodate the covering fabric (43) of the seat back (S) and additionally to accommodate parts of the seat upholstery, **characterised in that** the determination of the form and volume of the filler (F) prevents the contour (K1, K2) of an indenter ball from penetrating into the free or intermediate space (Z) between the covering cap (26) and the seat back structure (22), and that the filler (F), surrounding the support bar (14) in a rotationally symmetrical manner, projects beyond the cross-sectional area generated by an axial projection of the covering cap (26).

2. Headrest according to Claim 1, **characterised in that** the filler (F) forms a hollow body.

3. Headrest according to Claim 2, **characterised in that** the hollow body forming the filler (F) is produced in a liquid or gas injection moulding process.

4. Headrest according to any one of Claims 1 to 3, **characterised in that** the filler (F) and the guide part body or seat sleeve body (34) form a uniform injection-moulded part which is integrally continuous.

## Revendications

1. Appuie-tête (10) pour sièges de véhicule, comprenant au moins une barre support (14), sur la zone de barre support supérieure de laquelle (en 15) est maintenu un caisson pour tête (11) et dont la zone de barre support inférieure (19) est maintenue, par enfichage, chaque fois dans une partie de guidage (20), telle qu'une douille de siège ou analogue, qui est maintenue en un emplacement de fixation (21), telle qu'une membrure transversale supérieure ou analogue, de la structure du dossier de siège (22), la partie de guidage (20) reposant, par la face inférieure (33) d'un capuchon de recouvrement (26), sur la zone de sommet supérieure (36) d'un dossier de siège (S), et où, entre la face inférieure (33) du capuchon de recouvrement (26) et l'emplacement de fixation (21) de la structure de dossier de siège (22), est prévu un espace intermédiaire (Z) traversé par une partie de guidage (20), sachant que, dans la zone allant, au-dessous du capuchon de recouvrement (26), jusqu'à l'emplacement de fixation (21) de la structure de dossier de siège (22), de la partie de guidage (20), est disposé un corps de remplissage (F), sachant que, entre la face inférieure (33) du capuchon de recouvrement (26) et le corps de remplissage (F), est laissé un espace (R) servant à recevoir le tissu de revêtement (43) du dossier de siège (S) et, en plus, à recevoir des parties du rembourrage d'assise, **caractérisé en ce que** la conception, en forme et en volume, du corps de remplissage (F) empêche la pénétration du contour (K1, K2) d'une sphère d'essai dans l'espace libre ou intermédiaire (Z), entre le capuchon de revêtement (26) et la structure de dossier d'assise (22), et
**en ce que** le corps de remplissage (F), en entourant la barre support (14) en répondant à une symétrie de rotation, dépasse de la surface de section transversale produite par une projection axiale du capuchon de recouvrement (26).

2. Appuie-tête selon la revendication 1, **caractérisé en ce que** le corps de remplissage (F) forme un corps creux.

3. Appuie-tête selon la revendication 2, **caractérisé en ce que** le corps creux formant le corps de remplissage (F) est fabriqué dans un procédé de moulage par injection sous pression intérieure, produite par un liquide ou un gaz.

4. Appuie-tête selon l'une des revendications 1 à 3, **caractérisé en ce que** le corps de remplissage (F) et le corps de partie de guidage ou de douille de siège (34) forment une pièce moulée par injection unitaire, maintenue en cohésion par une liaison par la matière.
